# EUROPÄISCHE PATENTSCHRIFT

(11) **EP 0 704 390 B1**
(45) Veröffentlichungstag und Bekanntmachung des Hinweises auf die Patenterteilung: **27.05.1998**
(21) Anmeldenummer: 95112811.5
(22) Anmeldetag: 16.08.1995
(51) Int. Cl.: B65G 37/02, B65G 15/10, B65G 15/06, B65G 17/00, B65G 15/60

(54) **Fördersystem, insbesondere für Materialträger für den labormedizinischen Einsatz**
Conveyor system, in particular for load carriers for application in a medical laboratory
Système de transport, en particulier pour porte-charge pour usage médical

(30) Priorität: 28.09.1994 DE 4434714
(43) Veröffentlichungstag der Anmeldung: 03.04.1996
(73) Patentinhaber: v. Froreich, André, Dr., D-21149 Hamburg (DE)
(72) Erfinder: v. Froreich, André, Dr., D-21149 Hamburg (DE)
(74) Vertreter: von Raffay, Vincenz, Dipl.-Ing.

(56) Entgegenhaltungen:
- FR-A- 1 559 786
- FR-A- 2 622 876
- GB-A- 287 294
- US-A- 1 476 936
- US-A- 3 583 325

## Beschreibung

Grundsätzlich sind die unterschiedlichsten Fördersysteme bekannt. Die Erfindung ist auf ein solches gerichtet, bei dem die beiden endlosen Förderriemen mit kreisrundem Querschnitt parallel zueinander in einer waagerechten Ebene im Kreislauf geführt sind und so eine Vorlaufförderstrecke und eine Rücklaufförderstrecke bilden, die beide zum Transport der Materialträger im Kreislauf zur Verfügung stehen. Hierbei werden die Förderriemen durch nach oben abgewinkelten Teile geführt, so daß sie die Transportbahn nicht verlassen.

Derartige Fördersysteme lassen sich nicht beliebig lang ausführen. Bedingt durch konstruktive Vorgaben, Materialeigenschaften und Antriebs- und Führungsprobleme, ist die Länge und die damit zur Verfügung stehende Transportstrecke begrenzt. Auch gibt es Anwendungsfälle, in denen unterschiedlich lange Transportstrecken gefordert werden.

Der Erfindung liegt daher die Aufgabe zugrunde, ein Fördersystem der eingangs genannten Art zu schaffen, das auch über längere Transportstrecken eine Förderung und dabei gleichzeitig den Aufbau nach Art eines Baukastens ermöglicht.

Diese Aufgabe wird durch die Merkmale des Anspruches 1 gelöst.

Erfindungsgemäß werden zwei - oder mehr - Segmente zusammengesetzt, die jeweils zwei endlose Förderriemen aufweisen und lediglich an den Übergangsstellen aneinanderstoßen und miteinander verbunden sind. Dieses geschieht dadurch, daß die Förderriemen über besondere Umlenkrollen geführt sind, die gleichzeitig der Führung der kurzen Übergaberiemen dienen. Es lassen sich also praktisch beliebig viele Segmente hintereinander anordnen, um eine entsprechend lange Transportstrecke zu bilden. Die Übergaberiemen sorgen für einen sicheren Übergang an den Segmentübergangsstellen. Durch die waagerechte Anordnung der Achsen der Umlenkrollen lassen sich die Förderriemen nach unten abführen, wo sie dann entsprechend zu der benachbarten Förderbahn umgelenkt werden können. Durch die Schrägstellung der senkrechten Achsen der großen Rollen wird eine besonders kompakte Bauweise erreicht.

Gleichzeitig können die Übergaberiemen dafür sorgen, daß die Geschwindigkeiten der miteinander verbundenen Förderer miteinander synchronisiert werden (Anspruch 2).

Die Übergangsriemen können in der unterschiedlichsten Weise ausgestaltet sein (Ansprüche 3 bis 5).

Wenn eine Synchronisation der Geschwindigkeiten und ggf. ein gemeinsamer Antrieb der miteinander durch die Übergaberiemen verbundenen Segmente nicht erwünscht ist, so kann, wie in Anspruch 6 angegeben, ein Freilauf vorgesehen sein. In diesem Falle ist es beispielsweise möglich, die Geschwindigkeit des in Förderrichtung anschließenden Segmentes zu erhöhen und die Materialträger so auseinanderzuziehen und schneller zu fördern.

Weitere erfindungswesentliche Merkmale, Vorteile und Einzelheiten ergeben sich aus der nachfolgenden Beschreibung einer bevorzugten Ausführungsform der Erfindung, unter Bezugnahme auf die beigefügten Zeichnungen. Dabei zeigen:
- Fig. 1: eine perspektivische Gesamtdarstellung des Fördersystems,
- Fig. 2: einen Ausschnitt des Fördersystems gemäß Fig. 1 in größerem Maßstab,
- Fig. 3: eine Darstellung der Riemenumlenkung um 180° und
- Fig. 4: eine Darstellung der Riemenumlenkung um 90°.

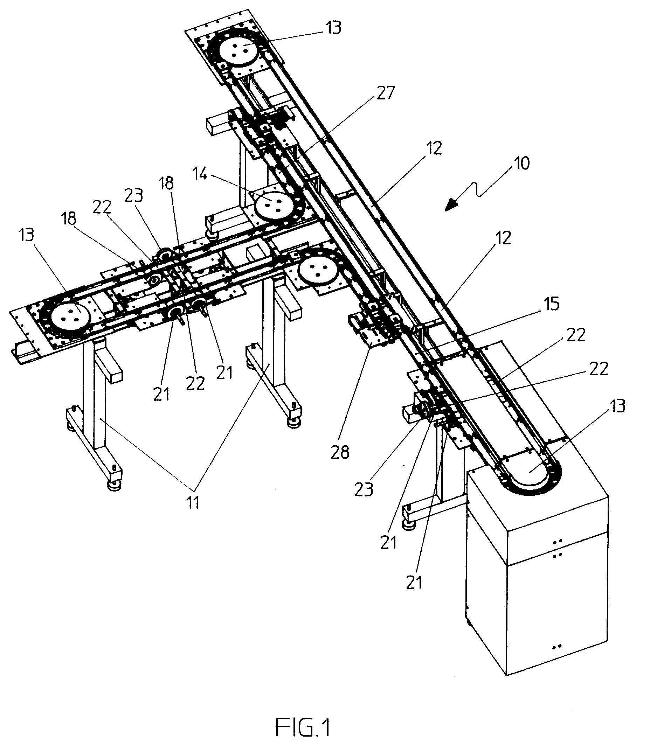

Der Aufbau des Fördersystems, das in seiner Gesamtheit mit der Bezugsziffer 10 versehen ist, soll zunächst unter Bezugnahme auf Fig. 1 näher erläutert werden. Das Fördersystem 10 ruht auf einem Gestell 11 und ist aus einzelnen geraden Segmenten 12, 180°-Kehren 13 und 90°-Umlenkungen 14 zusammengesetzt. Durch diese Modulbauweise läßt sich das Fördersystem 10 in nahezu beliebigen Ausführungsformen ausgestalten. Das Fördersystem 10 ist im Kreislauf geführt, so daß die transportierten Gegenstände Behandlungsstationen durchlaufen und an ihren Ausgangspunkt zurückgeführt werden.

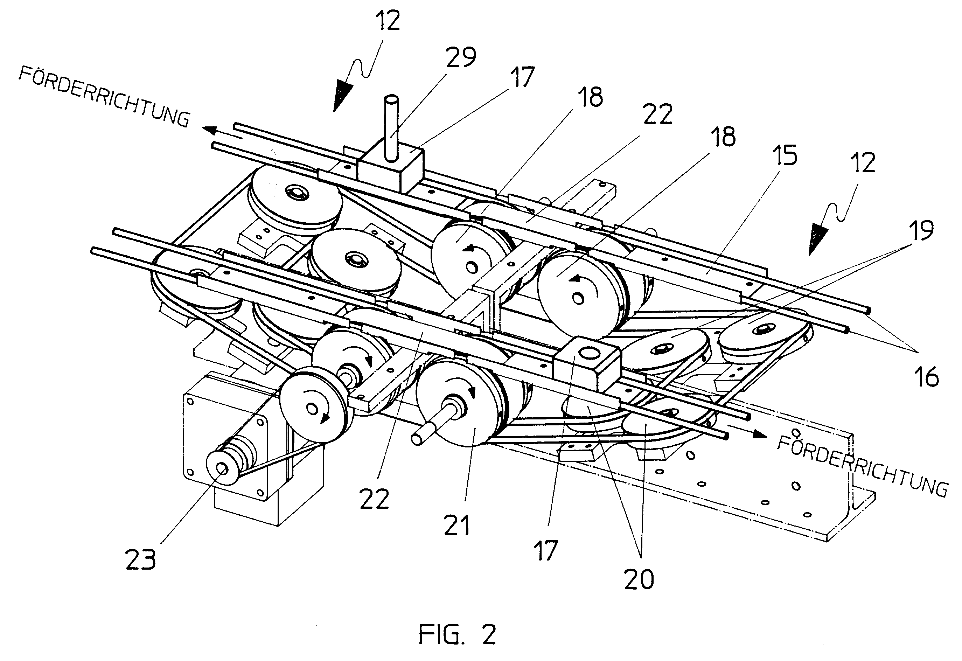

Zur Erläuterung des Fördersystems im einzelnen soll nachfolgend auf Fig. 2 Bezug genommen werden, die einen Ausschnitt in größerem Maßstab zeigt, an welchem zwei gerade Segmente 12 zusammenstoßen. Die Transportbahn 15 wird durch ein im wesentlichen U-förmig abgewinkeltes Blech gebildet, entlang dessen unterer Seitenkanten im Querschnitt im wesentlichen runde elastische Riemen 16 geführt werden. Ein etwa kubisch ausgebildeter Materialträger 17 liegt auf den Riemen 16 auf und wird in der in Fig. 2 durch einen Pfeil wiedergegebenen Förderrichtung transportiert, wobei die Schenkel der U-förmigen Transportbahn 15 eine Seitenführung bilden.

Die Riemen 16 bestehen bevorzugt aus einem thermoplastischen Polyurethan. Die einzelnen geraden Segmente 12 besitzen eine individuelle Riemenfuhrung. Die Riemen 16 werden jeweils am Ende des Segmentes umgelenkt, wobei die beiden aufeinanderzulaufenden Riemenpaare 16 über große Umlenkrollen 18 vertikal nach unten gelenkt und dort über schräggestellte große Rollen 19 in horizontaler Richtung unter die benachbarte Förderbahn 15 geleitet werden. Hier übernehmen in analoger Weise zwei Rollenpaare 20 die Umlenkung in horizontale Richtung und große Rollenpaare 21 in vertikale Richtung, um das Riemenpaar in die entgegengesetzte Förderrichtung zu leiten. Es werden somit beide Riementrume der Transportriemen 16 zur Förderung eingesetzt.

Besonders vorteilhaft erweisen sich die relativ großen Rollen, welche die verformungsbedingte Riemenbelastung und deshalb auch die Antriebskraft minimieren. Die Anordnung der horizontal umlenkenden Rollen 19, 20 minimiert die Schlupfneigung erheblich. Die Schrägstellung der horizontal umleitenden Rollen 19, 20 spart Bauvolumen und paßt sich dem gegebenen Rastermaß eines stabilen Trägersystems an.

Der kontinuierliche Weitertransport der Materialträger 17 zwischen den Riemenpaaren einzelner Segmente wird mit Hilfe von breiten Zahnriemen 22 gebildet. Diese können an den gewünschten Stellen zusätzlich Antriebsmomente übertragen. Damit ist es möglich, mit nur einem Antrieb 23 zwei Streckensegmente 12 direkt anzutreiben. Übergangsstellen, an denen die Drehmomentübertragung hinderlich ist, werden durch eine Freilauf-Lagerung einer Zahnscheibe pro breitem Zahnriemen 22 entkoppelt.

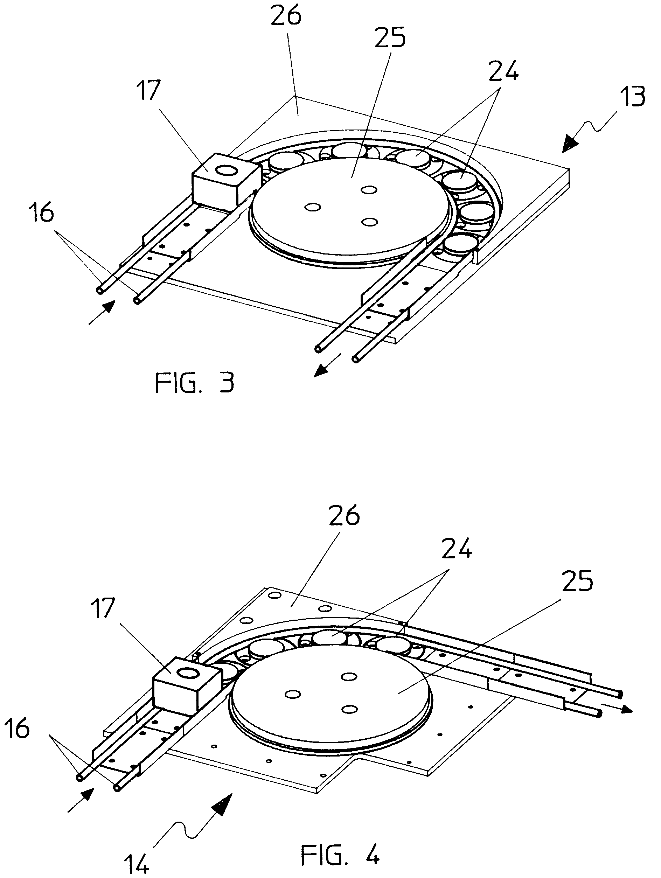

In der Horizontalebene gewundene Streckenführungen werden durch Umlenken der Riemen 16 an Rollen 24, 25 mit nach oben nicht überstehender Riemenauflagebreite realisiert. Die Fig. 3 zeigt ein Segment 13, bei welchem das Transportriemenpaar 16 um 180° umgelenkt wird. Eine große Rolle 25 dient der Umlenkung des inneren Riemens. Sie besitzt eine Umfangsnut zur Führung des Riemens und weist eine axiale Ausdehnung auf, die geringer ist als der Durchmesser des Riemens, so daß der Materialträger auch im Kurvenbereich auf dem Riemen aufliegt. Zur Umlenkung des äußeren Riemens sind, wie die Fig. 3 zeigt, mehrere Rollen 24 kleineren Durchmessers vorgesehen, deren struktureller Aufbau demjenigen der großen Rolle 25 entspricht. Die große Rolle 25 läßt sich ebenfalls durch eine Reihe mehrerer kleinerer Rollen ersetzen. Eine der Krümmung angepaßte Schulter eines Kurvenelementes 26 dient der Seitenführung des Materialträgers 17.

Ein Beispiel für die Umlenkung des Riemenpaares 16 um 90° ist in Fig. 4 wiedergegeben. Auch hier dient der Umlenkung des inneren Riemens eine große Rolle 25, während für die Umlenkung des äußeren Riemens mehrere kleinere Rollen 24 vorgesehen sind. Der Aufbau der Rollen 25 und 24 des Kurvenelementes 14 entspricht demjenigen des Kehrenelementes 13. Auch hier ist ein Kurvenelement 26 vorgesehen, dessen Schulter der Seitenführung des Materialträgers 17 dient.

Die Fig. 1 zeigt in schematischer Darstellung eine über einen Streckenabschnitt der Transportbahn 15 parallel geführte zusätzliche Transportbahn 27. Über eine Weiche 28 lassen sich vorbestimmte Materialträger 17 von der Transportbahn 15 auf die Parallelbahn 27 schieben. Damit können diese vorbestimmten Materialträger anderen oder zusätzlichen Anlaufstellen zugeführt werden.

Die Materialträger 17 sind im wesentlichen kubisch ausgebildet und tragen, gemäß der hier dargestellten Ausführungsform, eine Mittelöffnung, die etwa der Aufnahme eines Probenröhrchens 29 dient. Der Materialträger 17 ist auf seiner Unterseite mit einer Codierung versehen, wobei im Zuführungsbereich der Weiche die Identifikation des Probenträgers über quer zur Laufrichtung angeordnete Näherungsinitiatoren erfolgt. Die Betätigung der Weiche erfolgt dementsprechend in Abhängigkeit von der jeweiligen Codierung des Probenträgers. Der Materialträger ist mit 17 und ein von diesem getragenes Proberöhrchen mit 29 bezeichnet.

Bei der dargestellten und beschriebenen Ausführungsform befindet sich eine Segmentübergangsstelle, wie sie in Fig. 2 im einzelnen dargestellt ist, bei der Ausführungsform nach Fig. 1 einmal im Bereich der Transportbahn 27 und einmal im Bereich der Transportbahn 15. Einzelheiten der Segmentübergangsstelle im Bereich der Transportbahn 15 sind durch ein Blech abgedeckt und nicht erkennbar. Dieses Blech fehlt bei der Segmentübergangsstelle im Bereich der Transportbahn 27.

Anstelle der Zahnriemen 22 können nach einer anderen Ausführungsform mehrere parallellaufende Rundriemen als Übergangsriemen vorgesehen sein, die lediglich durch die zwischen den Umlenkrollen 18,18 oder 21,21 auftretende Reibung mitgenommen werden. Zur Führung sind entsprechende, umlaufende Nuten in den Umlenkrollen vorgesehen.

Die Übergaberiemen dienen der Übergabe von dem einen Segment zu dem anderen. Sie können auch dazu dienen, eine Synchronisation der Geschwindigkeiten der Förderriemen herzustellen und sogar die Antriebskraft von dem einen Segment auf das andere zu übertragen. Dieses ist aber nicht zwangsläufig. Jedes Segment kann getrennt und mit unterschiedlicher Geschwindigkeit angetrieben werden, wenn die einzelnen Anforderungen entsprechend sind.

## Patentansprüche

1. Fördersystem, insbesondere für Materialträger (17) für den labormedizinischen Einsatz, mit zwei endlosen, motorisch angetriebenen, im Transportbereich parallel und gleichsinnig in einer waagerechten Ebene geführten, runden Förderriemen (16), die auf in Transportrichtung verlaufenden, nach oben abgewinkelten Teilen geführt sind, und die am Anfang und Ende (13) einer Transportstrecke um Umlenkrollen (24,25) laufen und die Transportstrecke aus mindestens zwei Segmenten (12) mit jeweils zwei in der waagerechten Ebene geführten Förderriemen (16) besteht, die an der Segmentübergabestelle über im wesentlichen um waagerechte Achsen umlaufende Umlenkrollen (18,21) jeweils nach unten geführt sind, wobei
die nach unten geführten Förderriemen (16) über im wesentlichen um senkrechte Achsen, vorzugsweise etwas schräg gestellt, umlaufende große Rollen (19,20) unter die benachbarte Förderbahn geführt sind, und
die einander gegenüberliegenden, um im wesentlichen waagerechte Achsen umlaufende Umlenkrollen (18,18 bzw. 21,21) der aneinanderangrenzenden Segmente durch mindestens einen Übergaberiemen (22) miteinander verbunden sind.

2. Fördersystem nach Anspruch 1, dadurch gekennzeichnet, daß die Übergaberiemen (22) form- oder kraftschlüssig an den Umlenkrollen (18,21) geführt sind.

3. Fördersystem nach Anspruch 2, dadurch gekennzeichnet, daß die Übergaberiemen als Zahnriemen (22) ausgebildet sind.

4. Fördersystem nach Anspruch 2, dadurch gekennzeichnet, daß die Übergaberiemen einen im wesentlichen kreisrunden Querschnitt aufweisen.

5. Fördersystem nach Anspruch 4, dadurch gekennzeichnet, daß mindestens jeweils zwei Übergaberiemen mit kreisrundem Querschnitt über die zu verbindenden Umlenkrollen (18,18 oder 21,21) geführt sind.

6. Fördersystem nach einem der Ansprüche 1 bis 5, dadurch gekennzeichnet, daß die Umlenkrollen (18,18 oder 21,21), über die ein gemeinsamer Übergaberiemen läuft, durch einen Freilauf entkoppelt sind.

7. Fördersystem nach einem oder mehreren der vorstehenden Ansprüche, dadurch gekennzeichnet, daß der innere Transportriemen (16) am Anfang und Ende einer Transportstrecke und ggf. an anderen Umlenkbereichen um eine große Rolle (25) und der äußere um mehrere kleinere Rollen (24) geführt ist, die in einer Ebene liegen und flacher sind als der Durchmesser eines Förderriemens (16).

## Claims

1. Conveyor system, particularly for material support (17) for use in medical laboratories, with two continuous, motor-driven, round conveyor belts (16) which are parallel in the conveying area and are guided in the same direction in a horizontal plane, said belts being guided on upwardly bent parts running in the conveying direction and which at the start and end (13) of a conveyor section pass round guide pulleys (24, 25) and the conveyor section comprises at least two segments (12) guided in the horizontal plane and which are in each case downwardly guided at the segment transfer point by guide pulleys (18, 21) revolving substantially about horizontal axes, in which the downwardly guided conveyor belts (16) are guided under the neighbouring conveyor by means of large pulleys (19, 20) revolving substantially about vertical axes and preferably somewhat inclined and which face one another, in order to interconnect by at least one transfer belt (22) guide pulleys (18, 18 or 21, 21) revolving about substantially horizontal axes of the adjacent segments.

2. Conveyor system according to claim 1, characterized in that the transfer belts (22) are positively or non-positively guided at the guide pulleys (18, 21).

3. Conveyor system according to claim 2, characterized in that the transfer belts are constructed as toothed belts (22).

4. Conveyor system according to claim 2, characterized in that the transfer belts have a substantially circular cross-section.

5. Conveyor system according to claim 4, characterized in that at least two transfer belts with a circular cross-section are guided over the guide pulleys (18, 18 or 21, 21) to be connected.

6. Conveyor system according to one of the claims 1 to 5, characterized in that the guide pulleys (18, 18 or 21, 21), over which runs a common transfer belt, are decoupled by a freewheel.

7. Conveyor system according to one or more of the preceding claims, characterized in that the inner conveyor belt (16) at the start and end of a conveyor section and optionally at other deflection areas is guided about a large pulley (25) and the outer conveyor belt about several smaller pulleys (24), which are located in one plane and are flatter than the diameter of a conveyor belt (16).

## Revendications

1. Système de transport, en particulier pour porte-charge (17) pour une utilisation en laboratoire médical, comprenant deux courroies de transport (16) sans fin rondes, entraînées par moteur et guidées parallèlement et dans le même sens dans la zone de transport dans un plan horizontal, lesquelles courroies de transport sont guidées sur des éléments coudés vers le haut s'étendant dans la direction de transport et passent au début et à la fin (13) d'un trajet de transport autour de poulies de renvoi (24, 25) et le trajet de transport est formé d'au moins deux segments (12) comportant chacun deux courroies de transport (16) qui sont guidées dans le plan horizontal et sont respectivement guidées vers le bas au point de jonction des segments par l'intermédiaire de poules de renvoi (18, 21) tournant pour l'essentiel autour d'axes horizontaux, dans lequel
- les courroies de transport (16) guidées vers le bas sont guidées sous le chemin de transport voisin par l'intermédiaire de grosses poules (19, 20), de préférence légèrement inclinées, qui tournent pour l'essentiel autour d'axes verticaux, et
- les poulies de renvoi (18, 18 ou 21, 21), situées en vis-à-vis et tournant autour d'axes sensiblement horizontaux, des segments adjacents sont reliées entre elles par au moins une courroie de jonction (22).

2. Système de transport selon la revendication 1, caractérisé en ce que les courroies de jonction (22) sont guidées par complémentarité de formes ou par adhérence sur les poules de renvoi (18, 21).

3. Système de transport selon la revendication 2, caractérisé en ce que les courroies de jonction sont réalisées sous forme de courroies dentées (22).

4. Système de transport selon la revendication 2, caractérisé en ce que les courroies de jonction présentent une section sensiblement circulaire.

5. Système de transport selon la revendication 4, caractérisé en ce qu'au moins deux courroies de jonction de section circulaire passent chaque fois sur les poulies de renvoi (18, 18 ou 21, 21) à relier.

6. Système de transport selon l'une des revendications 1 à 5, caractérisé en ce que les poules de renvoi (18, 18 ou 21, 21), sur lesquelles passent une courroie de jonction commune, sont découplées par roue libre.

7. Système de transport selon une ou plusieurs des revendications précédentes, caractérisé en ce qu'au début et à la fin d'un trajet de transport et éventuellement dans d'autres zones de renvoi, la courroie de transport (16) intérieure est guidée autour d'une grosse poulie (25) et la courroie de transport extérieure autour de plusieurs poulies (24) plus petites qui se trouvent dans un plan et sont plus plates que le diamètre d'une courroie de transport (16).
